# EUROPEAN PATENT SPECIFICATION

(11) **EP 1 277 918 B1**
(45) Date of publication and mention of the grant of the patent: **21.02.2007**
(21) Application number: 02015938.0
(22) Date of filing: 17.07.2002
(51) Int. Cl.: F01D 5/18, F01D 17/16, F01D 9/04

(54) **Double-wall blade for a variable geometry turbine nozzle**
Doppelwandige Leitschaufel für einen Gasturbinenleitapparat
Aube de guidage à doubles parois pour une turbine à gaz

(30) Priority: 18.07.2001 IT TO20010704
(43) Date of publication of application: 22.01.2003
(73) Proprietor: AVIO S.p.A., 10135 Torino (IT)
(72) Inventor: Coutandin, Daniele, 10137 Torino (IT); Schips, Carmine, 10138 Torino (IT); Ciacci, Paolo, 10126 Torino (IT)
(74) Representative: Cerbaro, Elena

(56) References cited:
- EP-A- 0 416 542
- DE-B- 1 232 478
- US-A- 3 373 970
- US-A- 3 574 481
- US-A- 3 767 322
- US-A- 4 169 692
- US-A- 4 437 810
- US-A- 4 697 985
- US-A- 4 752 186
- US-A- 5 468 125
- US-A- 5 690 472
- US-A- 5 975 850

## Description

The present invention relates to a double-wall blade for a turbine, particularly for aeronautical applications.

As is known, a blade for a gas turbine of an aeronautical engine has an axis which is incident with the axis of the turbine and has a streamlined profile defined by a lateral wall, which, in use, is lapped by gas at a relatively high temperature and must therefore be continually cooled, for example by means of air obtained from a compressor disposed upstream from the turbine, in order to limit firstly the thermal stresses and secondly the mechanical stresses caused by the thermal expansion of the lateral wall itself.

Blades of the so-called "double-wall" type are known, in which the lateral wall comprises an outer wall and an inner wall, which are opposite, spaced from and integral with one another.

The need exists to provide a double-wall blade which, in use, is distinguished by a temperature range which is as regular as possible amongst the various areas of the lateral wall.

In particular, the need exists to provide a blade which has regular efficiency of heat exchange along the lateral wall, for example by limiting any areas of stagnation of the air which can cool the lateral wall. In addition, the need exists to remove different quantities of heat from amongst the various areas of the lateral wall according to a substantially predetermined map, since it is found experimentally that, in use, the lateral wall heats up differently from one area to another, in particular along the axis of the blade.

US 4697985 and US 3574481 disclose double-wall blades comprising an outer wall and an inner wall, which is faced the outer wall and is defined by an insertion member, without continuity of material with the outer wall. US 3373970 disclose a double wall blade, according to the preamble of claim 1, in which the outer and inner walls can be integral to one another.

The object of the present invention is to provide a double-wall blade for a turbine, particularly for aeronautical applications, which makes it possible to fulfil the above-described requirements simply and relatively economically.

According to the present invention, there is provided a double-wall turbine blade according to claim 1.

The invention will now be described with reference to the attached drawings, which illustrate a non-limiting embodiment of the invention, in which:
figure 1 illustrates in transverse cross-section a preferred embodiment of the double-wall blade for a turbine, particularly for aeronautical applications, produced according to the present invention;
figure 2 illustrates on an enlarged scale and in perspective the blade in figure 1 in cross-section along the line II-II in figure 1;
figure 3 is a partial view on an enlarged scale of an inner detail of the blade according to the arrow A in figure 1;
figure 4 illustrates in perspective and with parts removed for the sake of clarity an end of the blade in figures 1 and 2;
figure 5 illustrates in perspective, with parts removed for the sake of clarity and on an enlarged scale, a tail portion of the blade in figures 1 and 2;
figure 6 illustrates on a highly enlarged scale and with parts removed for the sake of clarity a detail of the blade in figure 2;
figure 7 is similar to figure 6 and illustrates a variation of the detail in figure 6; and
figure 8 is similar to figure 1 and shows a further variation of the blade in the above figures.

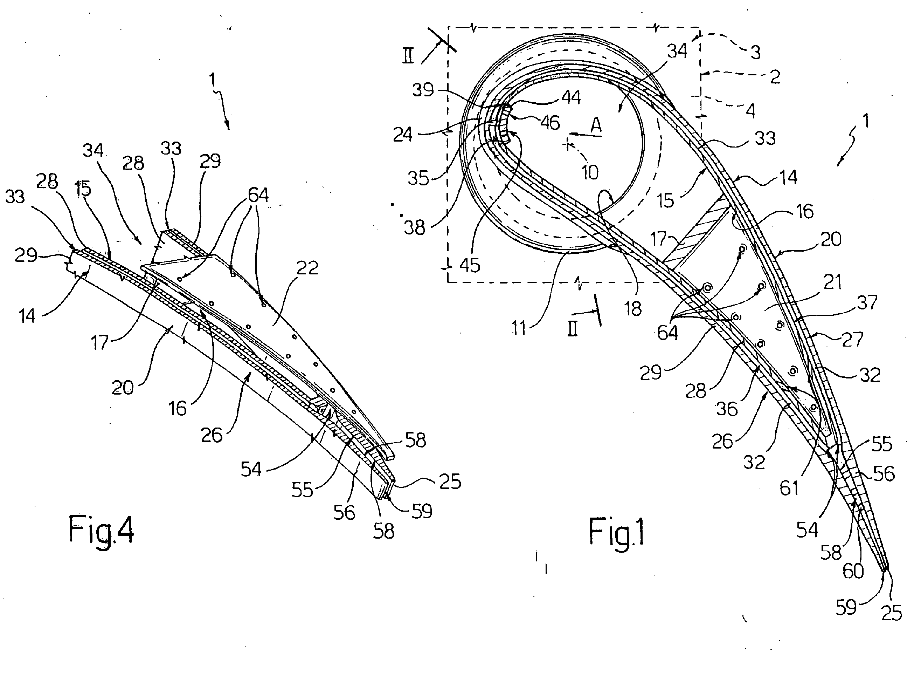

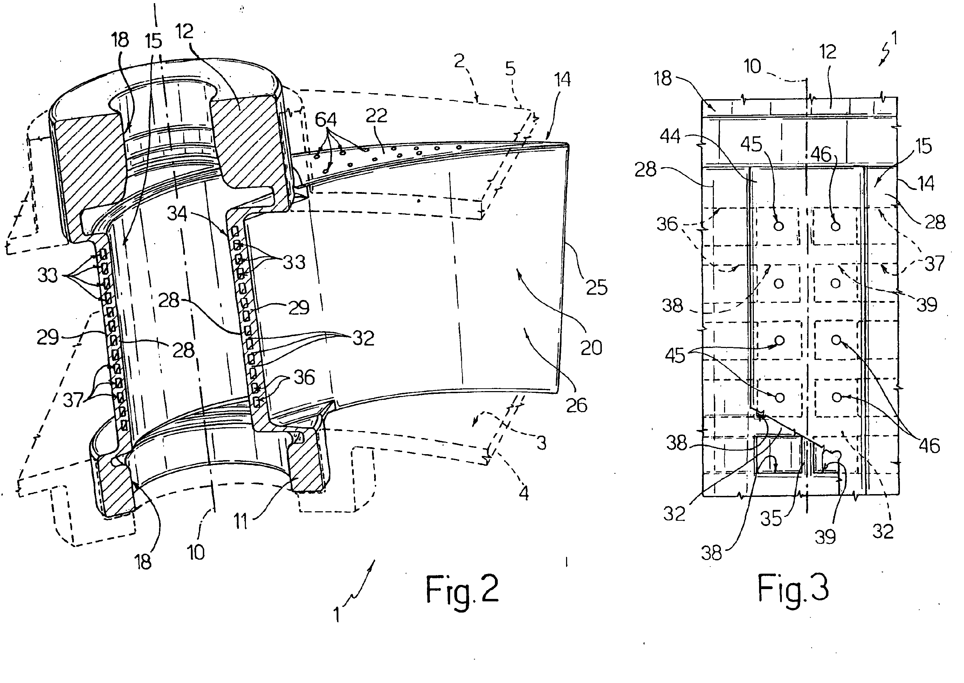

In figures 1 and 2, 1 indicates as a whole a blade, in particular a blade of a stator 2 (illustrated partially and schematically) in an axial gas turbine with variable geometry for an aeronautical engine, to which the following description refers explicitly without detracting from generality. The stator 2 defines an annular duct 3 (partially illustrated), which is provided around the axis of the turbine (not illustrated) and through which, in use, expanding gas at a high temperature passes and which is delimited radially by a pair of platforms 4,5 opposite one another, which support a row of blades 1.

The blade 1 has its own axis 10 which is incident with the axis of the turbine and comprises two opposite end portions 11,12, which are coaxial to one another along the axis 10 and are pivoted respectively on the platforms 4 and 5, in order to allow the blade 1 to rotate around the axis 10 itself in order to vary the capacity or geometry of the stator 2, and thus the flow rate of the gases which pass through the stator 2 itself.

The blade 1 additionally comprises an intermediate axial portion 14, which is integral with the portions 11,12, extends along the axis 10 in the duct 3 and delimits two inner cavities 15,16, which are separated from one another by a wall 17 parallel to the axis 10, and from which the cavity 15 extends along the axis 10 itself and communicates with the exterior via two axial passages 18 provided in the portions 11,12.

The portion 14 comprises a lateral wall 20 and a pair of end walls 21,22 which are disposed at the opposite axial ends of the lateral wall 20, transverse to the axis 10, delimit the cavity 16 axially and are connected in a sliding manner to the platforms 4 and 5 respectively.

Again as illustrated in figures 1 and 2, the lateral wall 20 surrounds the axis 10, is lapped in use by the gases which flow in the duct 3 and defines a streamlined profile which has a leading edge 24, a trailing edge 25, and a side or surface 26 which is subjected to pressure and is concave towards the exterior, and a side or surface 27 which is subjected to low pressure, and is convex towards the exterior, which sides extend between the leading edge 24 and the trailing edge 25.

The blade 1 is of the so-called "double-wall" type, i.e. the lateral wall 20 comprises an inner wall 28 and an outer wall 29, which face one another and are integral with one another. The walls 28,29 are spaced from one another by a distance which is substantially equal to their thickness, measured along a direction at right-angles to the walls 28,29 themselves, and are connected to one another by a number of baffles 32 disposed on planes which are parallel to one another and at right-angles to the axis 10.

The baffles 32 separate from one another axially a number of ducts 33, which have the same cross-section of passage, extend around the axis 10 tangentially to the walls 28,29 and constitute part of channelling 34 which also comprises the cavities 15,16 and, in use, can convey cooling air through the blade 1.

The baffles 32 are intersected by a baffle 35, which extends axially along the leading edge 24 and projects from the outer wall 29 towards the interior in order to divide the ducts 33 into a number of ducts 36 provided along the side 26 which is subjected to pressure and into a number of ducts 37 which are provided along the side 27 which is subjected to low pressure. The ducts 36,37 have respective intakes 38,39, which are provided in the wall 28 along two rows parallel to the axis 10, communicate with the cavity 15 and are separated from one another by the baffles 35 and 32 in order, in use, to allow a corresponding flow of cooling air which is distinct from the other flows to pass through each duct 36,37.

With reference to figures 1 and 3, between the intakes 38,39 and the cavity 15 there is interposed a plate-type element 44, which is connected integrally to the inner wall 28, preferably by means of brazing, and for each intake 38,39 has a corresponding circular through hole 45,46. The cross-sections of passage of the holes 45,46 have respective diameters which differ from one another and are calibrated according to the flow rate of cooling air which is to be made to flow through each duct 36,37.

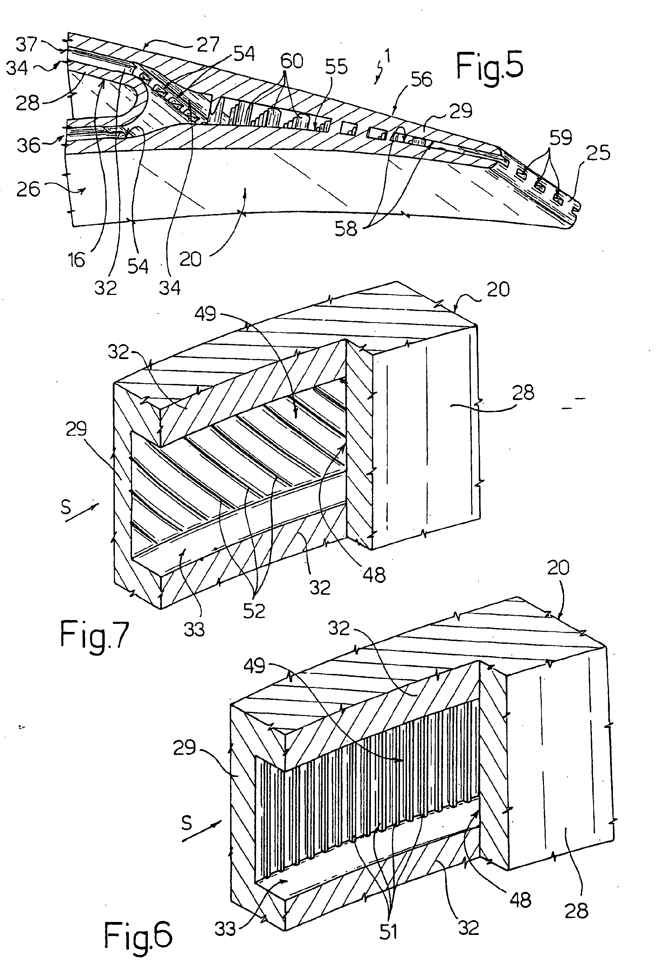

With reference to figures 6 and 7, the inner wall 28 and outer wall 29 have respective surfaces 48,49 which are opposite one another in order to delimit the ducts 36,37 and support a number of turbulence generators which can interrupt the final layer of the flow of cooling air along the surfaces 48,49 themselves. These turbulence generators are transverse to a direction S of advance of the flow of cooling air of the duct 33 and are defined according to figure 6 by ribs 51, or according to the variation in figure 7 by incisions 52 provided along the surfaces 48,49.

As illustrated in figures 1 and 5, each duct 36,37 ends in a corresponding main outlet 54, which is aligned with the duct 36,37 itself and communicates with a slot 55 provided in a tail portion 56 of the blade 1. The slot 55 constitutes part of the channelling 34, is delimited by the end walls 21,22 and by two flat surfaces 58 of the outer wall 29, opens along the outlet edge 25 through a number of ducts 59 and accommodates a number of cylindrical portions or tabs 60, which connect the surfaces 58 to one another.

As illustrated in figures 1 and 4, each duct 36,37 has a corresponding secondary outlet 61 (figure 1), which is provided through the inner wall 28 in order to open into the cavity 16, whereas the channelling 34 comprises a number of through holes 64 which are provided in the end walls 21,22 and communicate with the cavity 16 in order, in use, to convey the cooling air which is obtained from the outlets 61 and to cool the areas of connection between the end walls 21,22 and the platforms 4,5.

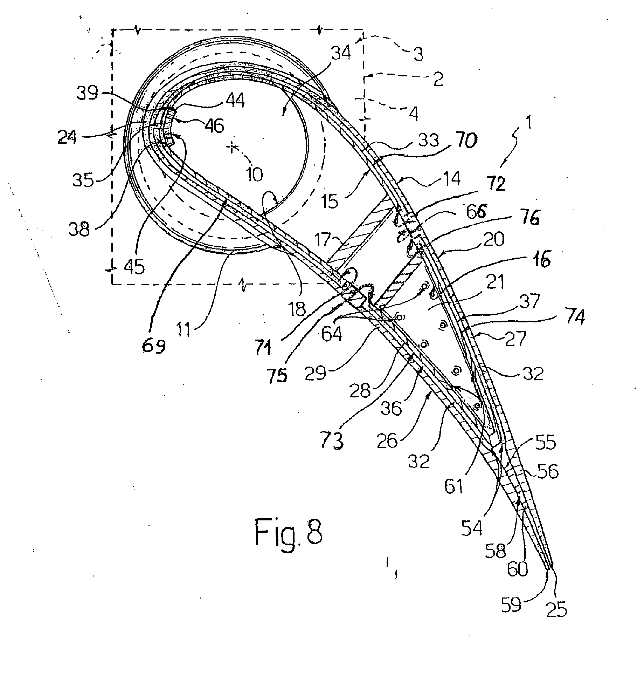

Figure 8 shows a blade 1a, the component parts of which are indicated, where possible, using the same reference numbers as for blade 1.

Blade 1a differs from blade 1 by portion 14 comprising, in addition to cavity 15,16, an intermediate chamber 66 separated from cavity 15 by a wall 17, and from cavity 16 by a wall 67 substantially parallel to wall 17.

As of intakes 38,39, each duct 36,37 comprises a relative first portion 69,70 terminating inside chamber 66 through an outlet 71,72 formed in inner wall 28; and a relative second portion 73,74 which extends from chamber 66 through a relative intake 75,76 formed in inner wall 28, and terminates with outlets 54,61.

In use, the cooling air, which is obtained for example from a compressor disposed upstream from the turbine, is conveyed in a manner which is known and is not described in detail through a passage 18 in the cavity 15, from which it enters into each duct 36,37 through the corresponding hole 45,46 and the corresponding intake 38,39. In each duct 36, 37 there flows a corresponding flow of cooling air, the flow rate of which is substantially constant and equal to a value which is dependent on the calibrated cross-section of the corresponding hole 45,46, which is established a priori for the same pressure difference between the cavity 15 and the outlets 54,61 and in regular thermal conditions.

The baffles 32 are therefore formed in one piece with walls 28,29 (figure 2) and transmit heat by means of conduction from the outer wall 29 which is lapped by the gases towards the inner wall 28, whereas the cooling air flows in the ducts 36,37 tangentially to the baffles 32 and to the inner wall 28 and outer wall 29, thus removing heat by convection. The part of the cooling air which flows from the outlets 61 enters into the cavity 16 and passes through the through holes 64 in order to form between the platforms 4,5 and the walls 21,22 a veil of air, which is particularly, but not exclusively suitable for turbines with variable geometry, since, as well as carrying out a cooling function, it prevents the gases from filtering between the platforms 4,5 and the walls 21,22 on the side 26 which is subjected to pressure, towards the side 27 which is subjected to low pressure.

The part of the cooling air which flows from the outlets 53 flows into the slot 55 tangentially to the surfaces 58 and around the cylindrical portions 60 in order to remove heat by convection from the tail portion 56 until it is output into the duct 3. In particular, the cylindrical portions 60 define respective thermal bridges which transmit heat by conduction between the surfaces 58.

It is apparent from the foregoing description that the channelling 34 makes it possible to cool the blade 1,1a such as to obtain a substantially regular range of temperatures along the lateral wall 20.

In fact, on the one hand, the channelling 34 makes it possible to make flows of cooling air flow along a direction of advance S which is tangential to the baffles 32 and to the walls 28,29, such that the efficiency of heat exchange between the cooling air itself and the lateral wall 20 is relatively high, in particular in comparison with other solutions in which transverse jets of air are provided which cover the lateral wall of the blade.

At the same time, the efficiency of heat exchange is regular between the various areas of the lateral wall 20, since the ducts 33 have respective intakes and outlets which are different from one another, and thus convey flows of air which are different from one another and are free from localised losses of load or areas of stagnation, caused for example by any elbowed sections, in relation to the flows of air themselves.

The fact that walls 28,29 are connected integrally by baffles 32 (figure 2) contributes towards making ducts 33 along axis 10 airtight and therefore independent of one another, and permits material continuity between walls 28,29, so that the heat from the gases in duct 3 flows by conduction from outer wall 29 to inner wall 28 in the material interposed axially between ducts 33, the only thermal resistance being the conductivity of the material itself.

If baffles 32 simply rested on one of walls 28, 29, as opposed to being formed in one piece with walls 28, 29, the heat would encounter greater thermal resistance due to the inevitable, albeit minor, discontinuity of the material of baffles 32 and walls 28,29, thus reducing the amount of heat removed and impairing thermal exchange efficiency.

In addition, if applicable, the baffles 32 which are transverse to the axis 10 make it possible to differentiate from one another the various flows of air in the ducts 33 along the axis 10.

In particular, the channelling 34 makes it possible to remove heat according to a substantially predefined map, since it is possible to establish a priori with good approximation the flow rate of the flows of air between the various ducts 36,37, by differentiating the flow rate of these flows both in the direction parallel to the axis 10 and between the side which is subjected to pressure 26 and the side which is subjected to low pressure 27. Thus, for example, it is possible to admit a flow rate of air which is greater in the ducts 36,37 which are provided along the axis 10 approximately halfway along the portion 14 in order to remove a greater quantity of heat from the central portions of the lateral wall 20, which in use are normally subjected to greater heating.

The flow rate of the flows of cooling air is regulated by the element 44 which can be added in a second stage to the remaining part of the blade 1,1a so as to calibrate the holes 45,46, for example according to the type of aeronautical engine and the position in which the blade 1,1a itself will be fitted.

The fact of cooling the walls 21,22 also makes it possible to limit the thermal expansions, and thus the mechanical stresses at the areas of connection of the blade 1,1a to the platforms 4,5, whereas the fact of using only the part of the air which is recuperated from the outlets 61 makes it possible not to affect substantially the cooling of the lateral wall 20. This recuperation is extremely simple, owing to the existence of the wall 17, which firstly separates the cavities 15 and 16 from one another in a manner sealed against fluid, and secondly contributes towards strengthening the blade 1.

The ribs 51, the incisions 52 and the cylindrical portions 60 generate in the flows of cooling air turbulent motion which increases the efficiency of the heat exchange.

Finally, the construction characteristics of blade 1a enable it to be produced more easily in one piece.

Blade 1a, in fact, is produced using a disposable core (not shown) made of ceramic material, in the form of a negative of the material of blade 1a, and comprising an intermediate portion eventually defining chamber 66. By virtue of outlets 71,72 and intakes 75,76, the intermediate portion joins at an intermediate point the lateral portions of the core eventually defining ducts 36 and 37, so that the core is easier to produce and stronger than the one required for blade 1, and the lateral portions of the ducts of which are joined slely at the ends, i.e. at intakes 38,39 and outlets 54,61.

Finally it is apparent from the foregoing description that modifications and variations which do not depart from the field of protection of the present invention can be made to the blade 1,1a described and illustrated.

In particular, the ducts 33 could have arrangements different from that indicated by way of example, provided that they are transverse to the axis 10, and/or dimensions different from those indicated by way of example. In addition, the ducts 33 could have cross-sections of passage with dimensions which differ from one another in order to have flow rates of air passing through them which differ from one another.

In addition, cylindrical portions or tabs similar to the cylindrical portions 60 could also be provided in the ducts 33.

Finally, the channelling 34 could also be provided in a fixed stator blade or in a rotor blade.

## Claims

1. A double-wall turbine blade (1) comprising a streamlined lateral wall (20) extending along an axis (10), surrounding said axis (10), and in turn comprising an inner wall (28) and an outer wall (29) facing and integral with each other; and channelling means (34) for a cooling fluid, comprising an intake cavity (15) for intake of said cooling fluid into said blade (1), and a number of cooling ducts (33) formed between said inner (28) and said outer (29) walls and tangentially to said inner (28) and said outer (29) wall said cooling ducts (33) extending in respective directions crosswise to said axis (10) and parallel to one another, being each airtight with respect to an adjacent duct (33), and having respective intakes (38,39) separate from one another and communicating with said intake cavity (15) so as to each guide a relative flow of said cooling fluid, which does not mix with the flow in the adjacent duct (33); **characterised in that** said channelling means (34) also comprise means (44) for regulation of the flow rate in order to diversify the flow rates of said flows of cooling fluid from one another; said channelling means (34) comprising an element (44) interposed between said intake cavity (15) and said intakes (38,39), connected integrally to said inner wall (28) and defining, for each said intake (38,39), a respective through hole (45,46), which puts the corresponding cooling duct (33) into communication with said intake cavity (15) and has a cross-section calibrated according to a predetermined flow rate of cooling fluid in the corresponding cooling duct (33).

2. Blade according to claim 1, **characterised in that** said inner (28) and outer (29) walls have respective surfaces (48,49) which delimit said cooling ducts (33), and by comprising turbulence generator means (51,52) distributed along both said surfaces (48,49).

3. Blade according to claim 1 or 2, **characterised in that** said cooling ducts (33) are separated and made airtight with respect to one another by baffles (32) formed in one piece with said inner (28) and outer (29) walls.

4. Blade according to claim 3, **characterised in that** said baffles (32) are disposed on respective planes at right-angles to said axis (10).

5. Blade according to anyone of the preceding claims, **characterised in that** said intake cavity (15) is an axial cavity which is delimited by said inner wall (28); said
intakes (38,39) being provided through said inner wall (28) along at least one axial row.

6. Blade according to claim 5, **characterised in that** said streamlined lateral wall (20) has a leading edge (24); a trailing edge (25); and a side (26) which is subjected to pressure and a side (27) which is subjected to low pressure which extend between said leading edge (24) and the trailing edge (25); the axial row of said intakes (38,39) being provided at said leading edge (24).

7. Blade according to claim 6 **characterised in that** said cooling ducts (33) comprise first ducts (36) provided along said side (26) which is subjected to pressure and second ducts (37) provided along said side (27) which is subjected to low pressure; means (35) for separation being provided between said first duct (36) and second duct (37) in order to define first intakes (38) in said first duct (36) and second intakes (39) in said second duct (37).

8. Blade according to claim 7, said means (44) for regulation of the flow rate comprising first (45) and second (46) holes which have a calibrated cross-section of passage and are each associated with a respective corresponding said first intake (38) and with a corresponding said second intake (39).

9. Blade according to any one of the preceding claims, **characterised in that** said streamlined lateral wall (20) can be accommodated in an annular duct (3) of said turbine, and **in that** it comprises a pair of end walls (21) (22) which are disposed at the opposite axial ends of said streamlined lateral wall (20), transversely to said axis (10) and in use can be connected to respective platforms (4) (5) which delimit said annular duct (3); said channelling means (34) comprising at least one opening (64) which is provided through at least one said end wall (21) (22).

10. Blade according to claim 9, **characterised in that** said channelling means (34) comprise a number of said openings (64) for each said end wall (21)(22).

11. Blade according to claim 9, or claim 10, **characterised in that** said openings (64) communicate with said intake cavity (15) through said cooling ducts (33).

12. Blade according to claim 11, **characterised in that** said channelling means (34) comprise a first chamber (16) delimited by said end walls (21) (22), by said inner wall (22) and by a wall (17) which separates said intake cavity (15); said first chamber (16) connecting said cooling ducts (33) and said openings (64).

13. Blade according to any one of the preceding claims, **characterised in that** said channelling means (34) comprise at least one passage (55) which is provided in a tail portion (56) of said blade (1) and opens along a trailing edge (25) of said streamlined lateral wall (20); said cooling ducts (33) having respective outlets (54) which open into said passage (55).

14. Blade according to claim 13, **characterised in that** said passage (55) is delimited by said outer wall (29) and accommodates a number of heat exchange elements (60) which project from said outer wall (29).

15. Blade according to claim 12, **characterised by** comprising a second chamber (66) formed in an intermediate position between said intake cavity (15) and said first chamber (16); each said cooling duct (33) comprising a relative first portion (69,70) having an outlet (71,72) terminating in said second chamber (66), and a relative second portion (73,74) having an intake (75,76) terminating in said second chamber (66).

16. Blade according to claim 2, **characterised in that** said turbulence generator means comprise a number of ribs (51) which are supported by at least one said inner wall (28) or outer wall (29) and are transverse to a direction of advance (S) of said flows.

17. Blade according to claim 16, **characterised in that** said turbulence generator means comprise a number of incisions (52) which are provided in at least one said inner wall (28) or outer wall (29) and are transverse to a direction of advance (S) of said flows.

18. Blade according to any one of the preceding claims, **characterised in that** said inner wall (28) and outer wall (39) are spaced from one another by a distance which is equal to the thickness of at least one said inner wall (28) or outer wall (29).

19. Blade according to any one of the preceding claims, **characterised in that** it comprises pivoting portions (11,12) which are disposed on opposite axial parts of said streamlined lateral wall (20) in order to rotate in use around said axis (10).

## Patentansprüche

1. Doppelwandige Turbinenschaufel (1) mit einer stromlinienförmigen Seitenwand (20), die sich entlang einer Achse (10) erstreckt, die Achse (10) umgibt und wiederum eine Innenwand (28) und eine Außenwand (29) umfasst, die einander zugewandt sind und eine Einheit bilden; und einer Kanalisiereinrichtung (34) für ein Kühlfluid, mit einem Einlassraum (15) zum Einlass des Kühlfluids in die Schaufel (1), und einer Anzahl von Kühlleitungen (33), die zwischen der inneren (28) und der äußeren (29) Wand und tangential zu der inneren (28) und der äußeren (29) Wand ausgebildet sind, wobei sich die Kühlleitungen (33) in jeweilige Richtungen quer zur Achse (10) und parallel zueinander erstrecken, luftdicht in Bezug zu einer angrenzenden Leitung (33) sind und jeweils Einlässe (38, 39) haben, die voneinander getrennt sind und mit dem Einlassraum (15) kommunizieren, um jeweils einen relativen Strom des Kühlfluids zu führen, der sich nicht mit dem Strom in der benachbarten Leitung (33) vermischt; **dadurch gekennzeichnet, dass** die Kanalisiereinrichtung (34) auch eine Einrichtung (44) zum Regulieren des Durchsatzes umfasst, um die Durchsätze der Kühlfluidströme untereinander zu diversifizieren; wobei die Kanalisiereinrichtung (34) ein Element (44) aufweist, das zwischen dem Einlassraum (15) und den Einlässen (38, 39) angeordnet ist, fest mit der Innenwand (28) verbunden ist, und für jeden Einlass (38, 39) ein jeweiliges Durchgangsloch (45, 46) bildet, welches die entsprechende Kühlleitung (33) in Kommunikation mit dem Einlassraum (15) setzt und einen Querschnitt hat, der entsprechend des vorbestimmten Durchsatzes an Kühlfluid in der korrespondierenden Kühlleitung (33) kalibriert ist.

2. Schaufel nach Anspruch 1, **dadurch gekennzeichnet, dass** die innere (28) und äußere (29) Wand jeweils eine Oberfläche (48, 49) hat, welche die Kühlleitungen (33) begrenzt, und durch das Vorhandensein von Turbulenz-Erzeugungselementen (51, 52), die entlang beider Oberflächen (48, 49) verteilt sind.

3. Schaufel nach Anspruch 1 oder 2, **dadurch gekennzeichnet, dass** die Kühlleitungen (33) durch Leitelemente (32) getrennt und in Bezug zueinander luftdicht gemacht sind, die mit der inneren (28) und der äußeren (29) Wand einstückig ausgebildet sind.

4. Schaufel nach Anspruch 3, **dadurch gekennzeichnet, dass** die Leitelemente (32) in jeweiligen Ebenen in rechten Winkeln zu der Achse (10) angeordnet sind.

5. Schaufel nach einem der vorstehenden Ansprüche, **dadurch gekennzeichnet, dass** der Einlassraum (15) ein axialer Hohlraum ist, welcher durch die Innenwand (28) begrenzt ist; wobei die Einlässe (38, 39) durch die Innenwand (28) hindurch entlang wenigstens einer axialen Reihe vorgesehen sind.

6. Schaufel nach Anspruch 5, **dadurch gekennzeichnet, dass** die stromlinienförmige Seitenwand (20) aufweist eine Vorderkante (24), eine Hinterkante (25) und eine Seite (26), welche einem Druck ausgesetzt ist, und eine Seite (27), welche einem Unterdruck ausgesetzt ist, die sich zwischen der Vorderkante (24) und der Hinterkante (25) erstrecken; wobei die axiale Reihe der Einlässe (38, 39) an der Vorderkante (24) vorgesehen ist.

7. Schaufel nach Anspruch 6, **dadurch gekennzeichnet, dass** die Kühlleitungen (33) erste Leitungen (36) umfassen, die entlang der Seite (26) vorgesehen sind, welche dem Druck ausgesetzt sind, und zweite Leitungen (37), die entlang der Seite (27) vorgesehen sind, welche dem Unterdruck ausgesetzt ist, wobei eine Einrichtung (35) zur Trennung zwischen der ersten Leitung (36) und der zweiten Leitung (37) vorgesehen ist, um die ersten Einlässe (38) in der ersten Leitung (36) und die zweiten Einlässe (39) in der zweiten Leitung (37) zu bilden.

8. Schaufel nach Anspruch 7, wobei die Einrichtung (44) zum Regulieren des Durchsatzes ein erstes (45) und zweites (46) Loch umfasst, welche einen kalibrierten Durchgangsquerschnitt haben und jeweils einem jeweiligen korrespondierenden ersten Einlass (38) und einem korrespondierenden zweiten Einlass (39) zugeordnet sind.

9. Schaufel nach einem der vorstehenden Ansprüche, **dadurch gekennzeichnet, dass** die stromlinienförmige Seitenwand (20) in einem Ringkanal (3) der Turbine aufgenommen sein kann und dass diese ein Paar Stirnwände (21) (22) umfasst, welche an den gegenüber liegenden axialen Enden der stromlinienförmigen Seitenwand (20) quer zur Achse (10) angeordnet sind und bei Benutzung mit jeweiligen Plattformen (4) (5) verbunden werden können, welche den Ringkanal (3) begrenzen; wobei die Kanalisierungseinrichtung (34) wenigstens eine Öffnung (64) umfasst, welche durch wenigstens eine der Stirnwand (21) (22) hindurch vorgesehen ist.

10. Schaufel nach Anspruch 9, **dadurch gekennzeichnet, dass** die Kanalisierungseinrichtung (34) eine Anzahl von Öffnungen (64) für jede Stirnwand (21) (22) umfasst.

11. Schaufel nach Anspruch 9 oder Anspruch 10, **dadurch gekennzeichnet, dass** die Öffnungen (64) mit dem Einlassraum (15) durch die Kühlleitungen (33) hindurch kommunizieren.

12. Schaufel nach Anspruch 11, **dadurch gekennzeichnet, dass** die Kanalisierungseinrichtung (34) eine erste Kammer (16) umfasst, die durch die Stirnwände (21) (22) durch die Innenwand (22) und durch eine Wand (17) begrenzt ist, welche den Einlassraum (15) trennt; wobei die erste Kammer (16) die Kühlleitungen (33) und die Öffnungen (64) verbindet.

13. Schaufel nach einem der vorstehenden Ansprüche, **dadurch gekennzeichnet, dass** die Kanalisierungseinrichtung (34) wenigstens einen Durchgang (55) umfasst, welcher in einem Verjüngungsbereich (56) der Schaufel (1) vorgesehen ist und entlang einer Hinterkante (25) der stromlinienförmigen Seitenwand (20) mündet; wobei die Kühlleitungen (33) jeweils Auslässe (54) haben, welche in den Durchgang (55) münden.

14. Schaufel nach Anspruch 13, **dadurch gekennzeichnet, dass** der Durchgang (55) durch die Außenwand (29) begrenzt ist und eine Anzahl von Wärmetauscherelemente (60) aufnimmt, welche von der Außenwand (29) vorstehen.

15. Schaufel nach Anspruch 12, **gekennzeichnet durch** das Vorhandensein einer zweiten Kammer (66), die in einer Zwischenposition zwischen dem Einlassraum (15) und der ersten Kammer (16) ausgebildet ist, wobei jede Kühlleitung (33) aufweist einen relativen ersten Bereich (69, 70) mit einem Auslass (71, 72), der in der zweiten Kammer (66) endet, und einen relativen zweiten Bereich (73, 74) mit einem Einlass (75, 76), der in der zweiten Kammer (66) endet.

16. Schaufel nach Anspruch 3, **dadurch gekennzeichnet, dass** die Turbulenz-Erzeugungselemente eine Anzahl von Rippen (51) umfassen, welche durch wenigstens eine Innenwand (28) oder Außenwand (29) getragen werden und quer zu einer Anströmrichtung (S) verlaufen.

17. Schaufel nach Anspruch 16, **dadurch gekennzeichnet, dass** die Turbulenz-Erzeugungselemente eine Anzahl von Einschnitten (52) umfassen, welche in wenigstens einer Innenwand (28) oder Außenwand (29) vorgesehen sind und quer zur Anströmrichtung (S) verlaufen.

18. Schaufel nach einem der vorstehenden Ansprüche, **dadurch gekennzeichnet, dass** die Innenwand (28) und die Außenwand (39) in einem Abstand zueinander angeordnet sind, welcher gleich der Dicke wenigstens einer Innenwand (28) oder Außenwand (29) ist.

19. Schaufel nach einem der vorstehenden Ansprüche, **dadurch gekennzeichnet, dass** diese Schwenkbereiche (11, 12) umfasst, welche auf gegenüberliegenden axialen Teilen der stromlinienförmigen Seitenwand (20) angeordnet sind, um sich bei Benutzung um die Achse (10) zu drehen.

## Revendications

1. Aube de turbine à double paroi (1) comprenant une paroi latérale aérodynamique (20) s'étendant le long d'un axe (10), entourant ledit axe (10) et comprenant à son tour une paroi interne (28) et une paroi externe (29) se faisant face et solidaires l'une de l'autre ; et un moyen de canalisation (34) pour un fluide de refroidissement, comprenant une cavité d'admission (15) pour l'admission dudit fluide de refroidissement dans ladite aube (1), et un certain nombre de conduits de refroidissement (33) formés entre ladite paroi interne (28) et ladite paroi externe (29) et tangentiellement à ladite paroi interne (28) et ladite paroi externe (29) ; lesdits conduits de refroidissement (33) s'étendant dans des directions respectives coupant ledit axe (10) et parallèles les unes aux autres, chacun étant étanche à l'air par rapport à un conduit adjacent (33) et ayant des admissions respectives (38, 39) séparées les unes des autres et communiquant avec ladite cavité d'admission (15) de façon à ce que chacun guide un écoulement relatif dudit fluide de refroidissement, qui ne se mélange pas à l'écoulement dans le conduit adjacent (33) ; **caractérisée en ce que** ledit moyen de canalisation (34) comprend également un moyen (44) pour la régulation du débit afin de diversifier les débits desdits écoulements de fluide de refroidissement les uns des autres ; ledit moyen de canalisation (34) comprenant un élément (44) interposé entre ladite cavité d'admission (15) et lesdites admissions (38, 39), raccordés solidairement à ladite paroi interne (28) et définissant, pour chaque dite admission (38, 39), un trou traversant respectif (45, 46), qui met le conduit de refroidissement correspondant (33) en communication avec ladite cavité d'admission (15) et a une section transversale étalonnée selon un débit prédéterminé du fluide de refroidissement dans le conduit de refroidissement correspondant (33).

2. Aube selon la revendication 1, **caractérisée en ce que** ladite paroi interne (28) et ladite paroi externe (29) ont des surfaces respectives (48, 49) qui délimitent lesdits conduits de refroidissement (33) et **en ce qu'**elle comprend un moyen générateur de turbulence (51, 52) distribué le long des deux dites surfaces (48, 49).

3. Aube selon la revendication 1 ou 2, **caractérisée en ce que** lesdits conduits de refroidissement (33) sont séparés et rendus étanches à l'air les uns par rapport aux autres par des chicanes (32) formées d'un seul tenant avec ladite paroi interne (28) et ladite paroi externe (29).

4. Aube selon la revendication 3, **caractérisée en ce que** lesdites chicanes (32) sont disposées sur des plans respectifs à angle droit par rapport audit axe (10).

5. Aube selon l'une quelconque des revendications précédentes, **caractérisée en ce que** ladite cavité d'admission (15) est une cavité axiale qui est délimitée par ladite paroi interne (28) ; lesdites admissions (38, 39) étant disposées à travers ladite paroi interne (28) le long d'au moins une rangée axiale.

6. Aube selon la revendication 5, **caractérisée en ce que** ladite paroi latérale aérodynamique (20) a un bord d'attaque (24) ; un bord de fuite (25) ; et un côté (26) qui est soumis à une pression et un côté (27) qui est soumis à une faible pression qui s'étend entre ledit bord d'attaque (24) et le bord de fuite (25) ; la rangée axiale desdites admissions (38, 39) étant disposée au niveau dudit bord d'attaque (24).

7. Aube selon la revendication 6, **caractérisée en ce que** lesdits conduits de refroidissement (33) comprennent des premiers conduits (36) disposés le long dudit côté (26) qui est soumis à une pression et des seconds conduits (37) disposés le long dudit côté (27) qui est soumis à une faible pression ; un moyen (35) pour la séparation étant disposé entre ledit premier conduit (36) et ledit second conduit (37) afin de définir des premières admissions (38) dans ledit premier conduit (36) et des secondes admissions (39) dans ledit second conduit (37).

8. Aube selon la revendication 7, ledit moyen (44) pour la régulation du débit comprenant des premier (45) et second (46) trous qui ont une section transversale étalonnée de passage et sont chacun associés à une dite première admission correspondante respective (38) et une dite seconde admission correspondante (39).

9. Aube selon l'une quelconque des revendications précédentes, **caractérisée en ce que** ladite paroi latérale aérodynamique (20) peut être logée dans un conduit annulaire (3) de ladite turbine, et **en ce qu'**elle comprend une paire de parois d'extrémité (21) (22) qui sont disposées au niveau des extrémités axiales opposées de ladite paroi latérale aérodynamique (20), transversalement audit axe (10) et en utilisation peuvent être raccordées aux plateformes respectives (4) (5) qui délimitent ledit conduit annulaire (3) ; ledit moyen de canalisation (34) comprenant au moins une ouverture (64) qui est disposée à travers au moins une dite paroi d'extrémité (21) (22).

10. Aube selon la revendication 9, **caractérisée en ce que** ledit moyen de canalisation (34) comprend un certain nombre desdites ouvertures (64) pour chaque dite paroi d'extrémité (21) (22).

11. Aube selon la revendication 9 ou la revendication 10, **caractérisée en ce que** lesdites ouvertures (64) communiquent avec ladite cavité d'admission (15) par lesdits conduits de refroidissement (33).

12. Aube selon la revendication 11, **caractérisée en ce que** ledit moyen de canalisation (34) comprend une première chambre (16) délimitée par lesdites parois d'extrémité (21) (22), par ladite paroi interne (22) et par une paroi (17) qui sépare ladite cavité d'admission (15) ; ladite première chambre (16) raccordant lesdits conduits de refroidissement (33) et lesdites ouvertures (64).

13. Aube selon l'une quelconque des revendications précédentes, **caractérisée en ce que** ledit moyen de canalisation (34) comprend au moins un passage (55) qui est disposé dans une portion de queue (56) de ladite aube (1) et s'ouvre le long d'un bord de fuite (25) de ladite paroi latérale aérodynamique (20) ; lesdits conduits de refroidissement (33) ayant des orifices de sortie respectifs (54) qui s'ouvrent dans ledit passage (55).

14. Aube selon la revendication 13, **caractérisée en ce que** ledit passage (55) est délimité par ladite paroi externe (29) et loge un certain nombre d'éléments d'échange de chaleur (60) qui dépassent de ladite paroi externe (29).

15. Aube selon la revendication 12, **caractérisée en ce qu'**elle comprend une seconde chambre (66) formée en une position intermédiaire entre ladite cavité d'admission (15) et ladite première chambre (16) ; chaque dit conduit de refroidissement (33) comprenant une première portion relative (69, 70) ayant un orifice de sortie (71, 72) se terminant dans ladite seconde chambre (66), et une seconde portion relative (73, 74) ayant une admission (75, 76) se terminant dans ladite seconde chambre (66).

16. Aube selon la revendication 2, **caractérisée en ce que** ledit moyen générateur de turbulence comprend un certain nombre de nervures (51) qui sont supportées par au moins une dite paroi interne (28) ou paroi externe (29) et sont transversales par rapport à une direction d'avancée (S) desdits écoulements.

17. Aube selon la revendication 16, **caractérisée en ce que** ledit moyen générateur de turbulence comprend un certain nombre d'incisions (52) qui sont disposées dans au moins une dite paroi interne (28) ou paroi externe (29) et sont transversales par rapport à une direction d'avancée (S) desdits écoulements.

18. Aube selon l'une quelconque des revendications précédentes, **caractérisée en ce que** ladite paroi interne (28) et ladite paroi externe (39) sont espacées l'une de l'autre d'une distance qui est égale à l'épaisseur d'au moins une dite paroi interne (28) ou paroi externe (29).

19. Aube selon l'une quelconque des revendications précédentes, **caractérisée en ce qu'**elle comprend des portions pivotantes (11, 12) qui sont disposées sur des parties axiales opposées de ladite paroi latérale aérodynamique (20) afin de tourner en utilisation autour dudit axe (10).
